(19) Europäisches Patentamt
European Patent Office
Office européen des brevets

(11) **EP 4 084 142 A1**

(12) **EUROPEAN PATENT APPLICATION**
published in accordance with Art. 153(4) EPC

(43) Date of publication:
**02.11.2022 Bulletin 2022/44**

(21) Application number: **20907572.0**

(22) Date of filing: **13.10.2020**

(51) International Patent Classification (IPC):
**H01M 4/505** (2010.01)   **C01G 53/00** (2006.01)
**H01M 4/525** (2010.01)

(52) Cooperative Patent Classification (CPC):
**C01G 53/00; H01M 4/505; H01M 4/525;**
**Y02E 60/10**

(86) International application number:
**PCT/JP2020/038578**

(87) International publication number:
**WO 2021/131241 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2019 JP 2019232595**

(71) Applicant: **Panasonic Intellectual Property Management Co., Ltd.**
**Osaka-shi, Osaka 540-6207 (JP)**

(72) Inventors:
• **IKEUCHI Issei**
  **Osaka-shi, Osaka 540-6207 (JP)**
• **HIBINO Mitsuhiro**
  **Osaka-shi, Osaka 540-6207 (JP)**

(74) Representative: **Novagraaf International SA**
**Chemin de l'Echo 3**
**1213 Onex, Geneva (CH)**

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**

(57)   This positive electrode active material for a non-aqueous electrolyte secondary battery contains a lithium-transition metal composite compound. The lithium-transition metal composite compound is represented by general formula $Li_xMn_yNi_zMe_\alpha O_aF_b$ (in the formula, $1 \leq x \leq 1.2$, $0.4 \leq y \leq 0.8$, $0 \leq z \leq 0.4$, $x+y+z=2$, $0 < a \leq 0.05$, $1.8 \leq a \leq 2$, and $1.8 \leq a+b \leq 2.2$ are satisfied, and Me represents at least two kinds of elements selected from metal elements other than Li, Mn, and Ni), and Me includes at least one kind of element having an ion radius of 0.6 Å or more.

Figure 1

EP 4 084 142 A1

**Description**

TECHNICAL FIELD

The present disclosure relates to a positive electrode active material for a non-aqueous electrolyte secondary battery, and to a secondary battery which uses the positive electrode active material for the non-aqueous electrolyte secondary battery.

BACKGROUND ART

In the related art, lithium-transition metal composite compounds are widely in use as a positive electrode active material for a secondary battery such as a lithium ion battery. For usage in a high-power secondary battery, Li-excess positive electrode active materials which contain a large amount of Li have attracted much attention. However, there is a problem in a battery which uses the Li-excess positive electrode active material in that the battery voltage is reduced through repetition of charging and discharging. Patent Literature 1 discloses a technique for suppressing the reduction of the battery voltage due to the charge/discharge cycle by improving a composition of the Li-excess positive electrode active material.

CITATION LIST

PATENT LITERATURE

PATENT LITERATURE 1: Japanese Patent No. 6342161

SUMMARY

A battery which uses the Li-excess positive electrode active material disclosed in Patent Literature 1 has a low initial voltage of about 3.58 V.
According to one aspect of the present disclosure, there is provided a positive electrode active material for a non-aqueous electrolyte secondary battery, including a lithium-transition metal composite compound. The lithium-transition metal composite compound is represented by a general formula $Li_xMn_yNi_zMe_\alpha O_aF_b$ (wherein $1{\leq}x{\leq}1.2$, $0.4{\leq}y{\leq}0.8$, $0{\leq}z{\leq}0.4$, $x+y+z=2$, $0{<}\alpha{\leq}0.05$, $1.8{\leq}a{\leq}2$, $1.8{\leq}a+b{\leq}2.2$, and Me is at least two elements selected from metal elements other than Li, Mn, and Ni), and Me includes at least one element having an ion radius of 0.6 Å or greater.
According to another aspect of the present disclosure, there is provided a non-aqueous electrolyte secondary battery including a positive electrode including the positive electrode active material for the non-aqueous electrolyte secondary battery, a negative electrode, and a non-aqueous electrolyte.
With the positive electrode active material for the non-aqueous electrolyte secondary battery according to an aspect of the present disclosure, the reduction of the battery voltage due to the charge/discharge cycle can be suppressed while setting an initial voltage of the secondary battery high.

BRIEF DESCRIPTION OF DRAWING

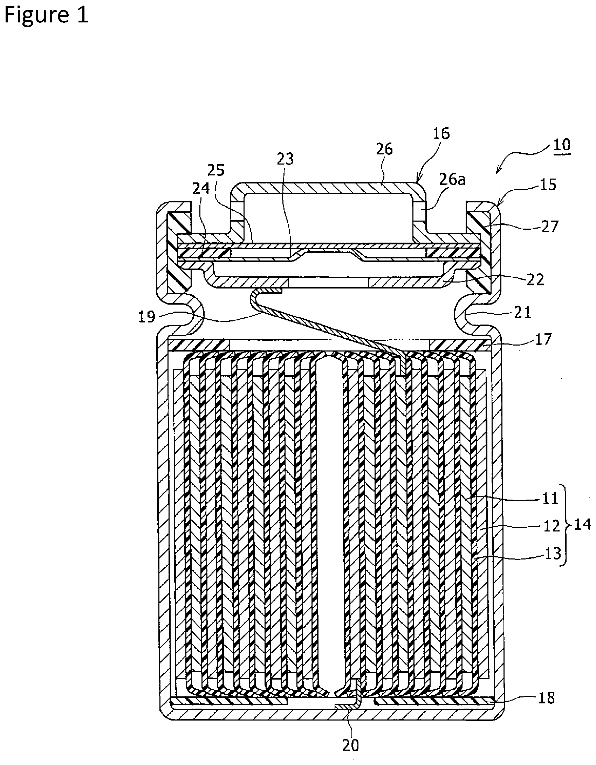

FIG. 1 is a cross-sectional diagram along a vertical direction of a secondary battery of a circular cylindrical type according to an embodiment of the present disclosure.

DESCRIPTION OF EMBODIMENTS

A Li-excess positive electrode active material in which a part of a transition metal layer of a lithium-transition metal composite compound having a layered rock-salt type structure is replaced with Li has attracted much attention as a material for a high-power secondary battery. However, there is a problem in that, when charging and discharging are repeated, a power of the battery is reduced. The present inventors have eagerly reviewed the problem, and found that, by solid-dissolving a metal element having an ion radius of 0.6 Å or greater, the structure of the lithium-transition metal composite compound can be stabilized, and that, by including two or more metal elements each having an ion radius of 0.6 Å or greater, a configuration entropy can be increased, and the solid solution can be stabilized. Based on the knowledge, the present inventors have conceived of the positive electrode active material for the non-aqueous electrolyte secondary battery of the following configuration, in which the reduction of the battery voltage due to the charge/discharge cycle can be suppressed while the initial voltage of the secondary battery is set high.
A positive electrode active material for a non-aqueous electrolyte secondary battery according to an embodiment of the present disclosure comprises a lithium-transition metal composite compound. The lithium-transition metal composite compound is represented by a general formula $Li_xMn_yNi_zMe_\alpha O_aF_b$ (wherein $1 \leq x \leq 1.2$, $0.4 \leq y \leq 0.8$, $0 \leq z \leq 0.4$, $x+y+z=2$, $0 < a \leq 0.05$, $1.8 \leq a \leq 2$, $1.8 \leq a+b \leq 2.2$, and Me is at least two elements selected from metal elements other than Li, Mn, and Ni), and Me includes at least one element having an ion radius of 0.6 Å or greater.

A secondary battery of a circular cylindrical type according to an embodiment of the present disclosure will now be described in detail with reference to the drawings. In the following, a specific shape, a specific material, a specific numerical value, a specific direction, and the like are merely exemplary for the purpose of facilitating understanding of the present disclosure, and these parameters may be suitably changed according to the specification of the circular cylindrical secondary battery. Further, the outer housing is not limited to the circular cylindrical type, and may alternatively be, for example, of a polygonal type. In the following description, when a plurality of embodiments and alternative configurations are included, suitable combination of the characteristic portions thereof are contemplated from the start.

FIG. 1 is a cross-sectional diagram in an axial direction of a secondary battery 10 of a circular cylindrical type according to an embodiment of the present disclosure. In the secondary battery 10 shown in FIG. 1, an electrode assembly 14 and a non-aqueous electrolyte (not shown) are housed in an outer housing 15. The electrode assembly 14 has a wound type structure in which a positive electrode 11 and a negative electrode 12 are wound with a separator 13 therebeween. In the following, for convenience of description, a side of a sealing assembly 16 will be referred to as an "upper side", and a side of a bottom of the outer housing 15 will be referred to as a "lower side".

An opening end of the outer housing 15 is blocked by the sealing assembly 16 so that an inside of the secondary battery 10 is airtightly closed. Insulating plates 17 and 18 are provided respectively above and below the electrode assembly 14. A positive electrode lead 19 extends upward through a through hole of the insulating plate 17, and is welded to a lower surface of a filter 22 which is a bottom plate of the sealing assembly 16. In the secondary battery 10, a cap 26 which is a top plate of the sealing assembly 16 electrically connected to the filter 22 serves as a positive electrode terminal. On the other hand, a negative electrode lead 20 extends to the side of the bottom of the outer housing 15 through a through hole of the insulating plate 18, and is welded to an inner surface of the bottom of the outer housing 15. In the secondary battery 10, the outer housing 15 serves as a negative electrode terminal. When the negative electrode lead 20 is placed at a terminating end, the negative electrode lead 20 extends through an outer side of the insulating plate 18 and to the side of the bottom of the outer housing 15, and is welded to the inner surface of the bottom of the outer housing 15.

The outer housing 15 is, for example, a metal outer housing can of a circular cylindrical shape with a bottom. A gasket 27 is provided between the outer housing 15 and the sealing assembly 16, so as to secure airtightness of the inside of the secondary battery 10. The outer housing 15 has a groove portion 21 which is formed, for example, by pressing a side surface portion from an outer side, and which supports the sealing assembly 16. The groove portion 21 is desirably formed in an annular shape along a circumferential direction of the outer housing 15, and supports the sealing assembly 16 with the upper surface thereof, via the gasket 27.

The sealing assembly 16 has the filter 22, a lower vent member 23, an insulating member 24, an upper vent member 25, and the cap 26, which are layered in this order from the side of the electrode assembly 14. The members of the sealing assembly 16 have, for example, a circular disk shape or a ring shape, and members other than the insulating member 24 are electrically connected to each other. The lower vent member 23 and the upper vent member 25 are connected to each other at respective center parts, and the insulating member 24 interposes between peripheral parts of the vent members. When an inner pressure of the battery increases due to abnormal heat generation, for example, the lower vent member 23 ruptures, and the upper vent member 25 expands to the side of the cap 26 and moves away from the lower vent member 23, so that the electrical connection between the vent members is shut out. When the inner pressure further increases, the upper vent member 25 ruptures, and gas is discharged from an opening 26a of the cap 26.

The positive electrode 11, the negative electrode 12, the separator 13, and the non-aqueous electrolyte forming the secondary battery 10 will now be described in detail. In particular, a positive electrode active material included in a positive electrode mixture layer which is a part of the positive electrode 11 will be described in detail.

[Positive Electrode]

The positive electrode 11 comprises a positive electrode core, and a positive electrode mixture layer provided over a surface of the positive electrode core. For the positive electrode core, there may be employed a foil of a metal which is stable within a potential range of the positive electrode 11 such as aluminum, a film on a surface layer of which the metal is placed, or the like. The positive electrode mixture layer includes a positive electrode active material, a binder agent, a conductive agent, and is desirably provided on both surfaces of the positive electrode core except for a portion to which the positive electrode lead 19 is connected. The positive electrode 11 can be produced, for example, by applying a positive electrode mixture slurry including the positive electrode active material, the binder agent, the conductive agent, or the like over the surface of the positive electrode core, drying the applied film, and compressing the dried film to form the positive electrode mixture layer over both surfaces of the positive electrode core.

As the conductive agent included in the positive electrode mixture layer, there may be exemplified carbon materials such as carbon black, acetylene black, Ketjen black, graphite, or the like. As the binder agent included in the positive electrode mixture layer, there may be exemplified a fluororesin such as polytetrafluoroethylene (PTFE), polyvinylidene fluoride (PVdF), polyacrylonitrile (PAN), polyimide, an acrylic resin, polyolefin, or the like. These materials may be used in combination with a cellulose derivative such as carboxymethyl cellulose (CMC) or a salt thereof, polyethylene oxide (PEO), or the like.

The positive electrode active material includes a lithium-transition metal composite compound. The lithium-transition metal composite compound desirably has a crystal structure of an O3 structure. The O3 structure is desirably, for example, 50 volume% or greater of the crystal structure of the lithium-transition metal composite compound, is more desirably 90 volume% or greater, is even more desirably 98 volume% or greater, and is particularly desirably 100 volume%, from the viewpoint of stability of the crystal structure. Here, the O3 structure refers to a layer-form crystal structure in which lithium exists at a center of an oxygen octahedron and there are three overlaps of oxygen and the transition metal per unit lattice, and belongs to a space group R-3m or C2/m.

The lithium transition metal composite compound is represented by a general formula $Li_xMn_yNi_zMe_\alpha O_aF_b$ (wherein $1 \leq x \leq 1.2$, $0.4 \leq y \leq 0.8$, $0 \leq z \leq 0.4$, $x+y+z=2$, $0<a \leq 0.05$, $1.8 \leq a \leq 2$, $1.8 \leq a+b \leq 2.2$, and Me is at least two elements selected from metal elements other than Li, Mn, and Ni), and Me includes at least one element having an ion radius of 0.6 Å or greater. In a secondary battery having a positive electrode including such a positive electrode active material, the reduction of the battery voltage due to the charge/discharge cycle is suppressed while the initial voltage of the secondary battery is increased. A molar fraction of each element of the lithium-transition metal composite compound may be measured, for example, through inductively coupled plasma (ICM) emission spectrometry. The positive electrode active material has the lithium-transition metal composite compound as a primary component, and, in some cases, may be formed solely from the lithium-transition metal composite compound. The positive electrode active material may include a composite compound other than the lithium-transition metal composite compound within a range of not adversely affecting an objective of the present disclosure.

Me may include at least one element selected from K, Sr, Ba, Bi, Ca, La, Pr, Y, Dy, Sn, and Zn. As shown in TABLE 1, each of these elements has an ion radius of 0.6 Å or greater. Further, the ion radius of Me is desirably 1.2 Å or lower, from the viewpoint of ease of the solid-dissolution to the lithium-transition metal composite compound.

[TABLE 1]

| ELEMENT | ION RADIUS (Å) |
|---|---|
| $K^+$ | 1.38 |
| $Zn^{2+}$ | 0.74 |
| $Ca^{2+}$ | 1.00 |
| $Sr^{2+}$ | 1.18 |
| $Ba^{2+}$ | 1.35 |
| $Y^{3+}$ | 0.90 |
| $Dy^{3+}$ | 0.91 |
| $Pr^{3+}$ | 0.99 |
| $Bi^{3+}$ | 1.03 |
| $La^{3+}$ | 1.03 |
| $Sn^{4+}$ | 0.69 |

Me may include at least one element selected from Sr, Ca, Y, and Sn. With this configuration, the initial voltage can be improved while suppressing the voltage reduction due to the charge/discharge cycle.

Me is desirably formed substantially and solely from at least three elements selected from Sr, Ca, Y, and Sn. With this configuration, it is possible to more reliably improve the initial voltage while suppressing the voltage reduction due to the charge/discharge cycle. Here, the description of "formed substantially from A" means that the compound has A as a primary component and elements other than A may be included within a range of not adversely affecting the objective of the present disclosure.

Me desirably includes at least an alkaline earth metal element. The alkaline earth metal element is desirable because it is not expensive and can be easily obtained. From the viewpoint of the ease of solid-dissolution, Sr and Ca are more desirable.

A molar fraction $\alpha$ of Me desirably satisfies the condition of $0.01 \leq \alpha \leq 0.03$. By satisfying the condition of $\alpha \geq 0.01$, the voltage reduction due to the charge/discharge cycle can be more reliably suppressed, and, by satisfying the condition of $\alpha \leq 0.03$, the molar fractions of Mn and Ni can be increased, resulting in a higher capacity of the battery.

The lithium-transition metal composite compound may be produced by, for example, adding and mixing raw materials such as a Li compound, a Mn compound, a Ni compound, and an Me compound to achieve a predetermined molar ratio, grinding and mixing the obtained mixture through a mechanochemical process using a ball mill or the like, and baking the ground and mixed mixture. A baking temperature of the mixture is desirably in a range of 700°C $\sim$ 1000°C. A baking atmosphere is desirably an oxygen atmosphere or the atmospheric air. Alternatively, the mixture obtained by adding and mixing the raw materials may be baked without the mechanochemical process being applied for production of the lithium-transition metal composite compound, but desirably, the mechanochemical process is applied, from the viewpoint of the ease of solid-dissolution of Me.

No particular limitation is imposed on the Li compound, and the Li compound may be, for example, $LiF$, $Li_2CO_3$, $LiOH$, or the like. No particular limitation is imposed on the Mn compound, and the Mn compound may be, for example, $LiMnO_2$, $Li_2MnO_3$, $Mn_2O_3$, $MnO$, $Mn_3O_4$, or the like. No particular limitation is imposed on the Ni compound, and the Ni compound may be, for example, $LiNiO_2$, $NiO$, or the like. No particular limitation is imposed on the Me compound, and the Me compound may be an oxide of Me, more specifically, $MeO$, $Me_2O_3$, $MeO_2$, or the like.

[Negative Electrode]

The negative electrode 12 includes a negative electrode core and a negative electrode mixture layer provided over a surface of the negative electrode core. For the negative electrode core, there may be employed a foil of metal stable within a potential range of the negative electrode such as copper, a film on a surface layer of which the metal is placed, or the like. The negative electrode mixture layer includes a negative electrode active material and a binder agent, and is desirably provided over both surfaces of the negative electrode core except for a portion to which the negative electrode lead 20 is connected. The negative electrode 12 can be produced, for example, by applying a negative electrode mixture slurry including the negative electrode active material, the binder agent, or the like over a surface of the negative electrode core, drying the applied film, and compressing the dried film, to form the negative electrode mixture layer over both surfaces of the negative electrode core.

The negative electrode mixture layer includes, as the negative electrode active material, for example, a carbon-based active material which can reversibly occlude and release lithium ions. Desirable examples of the carbon-based active material include graphties such as natural graphites such as flake graphite, massive graphite, amorphous graphite, or the like, and artificial graphites such as massive artificial graphite (MAG), graphitized meso-phase carbon microbeads (MCMB), or the like. Alternatively, an Si-based active material formed from at least one of Si or a Si-containing compound may be used, or the carbon-based active material and the Si-based material may be used in a combined manner.

As the binder agent included in the negative electrode mixture layer, similar to the case of the positive electrode, a fluororesin, PAN, polyimide, an acrylic resin, polyolefin, or the like may be employed, but desirably, styrene-butadiene rubber (SBR) is employed. The negative electrode mixture layer may further contain CMC or a salt thereof, a polyacrylic acid (PAA) or a salt thereof, polyvinyl alcohol (PVA), or the like. In particular, desirably, SBR, CMC or the salt thereof, and PAA or the salt thereof are used in a combined manner.

[Separator]

For the separator 13, for example, a porous sheet having an ion permeability and an insulating property, or the like is employed. Specific examples of the porous sheet include a microporous thin film, a woven fabric, a non-woven fabric, or the like. As a material forming the separator, there may be exemplified an olefin-based resin such as polyethylene and polypropylene, cellulose, or the like. Alternatively, the separator 13 may be a layered assembly having a cellulose fiber layer and a thermoplastic resin fiber layer such as an olefin-based resin. Alternatively, the separator 13 may be a multilayer separator including a polyethylene layer and a polypropylene layer, or a structure may be employed in which materials such as an aramid-based resin, a ceramic, or the like is applied over a surface of the separator 13.

[Non-aqueous Electrolyte]

The non-aqueous electrolyte includes a non-aqueous solvent and an electrolyte salt dissolved in the non-aqueous solvent. The non-aqueous electrolyte is not limited to a liquid electrolyte (electrolyte solution), and may alternatively be a solid electrolyte using a gel-form polymer or the like. For the non-aqueous solvent, for example, esters, ethers, nitriles such as acetonitrile, amides such as dimethylformamide, or a mixture solvent of two or more of these solvents may be employed. The non-aqueous solvent may include a halogen-substituted product in which at least a part of hydrogens of the solvent described above is substituted with a halogen atom such as fluorine.

Examples of the esters include cyclic carbonates such as ethylene carbonate (EC), propylene carbonate (PC), and butylene carbonate, chain carbonates such as dimethyl carbonate (DMC), ethylmethyl carbonate (EMC), diethyl carbonate (DEC), methylpropyl carbonate, ethylpropyl carbonate, and methylisopropyl carbonate, cyclic carboxylate esters such as γ-butyrolactone and γ-valerolactone, and chain carboxylate esters such as methyl acetate, ethyl acetate, propyl acetate, methyl propionate (MP), ethyl propionate, and γ-butyrolactone.

Examples of the ethers include cyclic ethers such as 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methyl furan, 1,8-cineol, and crown ether, and chain ethers such as 1,2-dimethoxy ethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxy benzene, 1,2-diethoxy ethane, 1,2-dibutoxy ethane, diethylene glycol dimethyl ether, diethylene glycol diethyl ether, diethylene glycol dibutyl ether, 1,1-dimethoxy methane, 1,1-diethoxy ethane, triethylene glycol dimethyl ether, and tetraethylene glycol dimethyl.

As the halogen-substituted product, desirably, a fluorinated cyclic carbonate such as fluoroethylene carbonate (FEC), a fluorinated chain carbonate, or a fluorinated chain carboxylate ester such as fluoromethyl propionate (FMP) is employed.

The electrolyte salt is desirably a lithium salt. Examples of the lithium salt include $LiBF_4$, $LiClO_4$, $LiPF_6$, $LiAsF_6$, $LiSbF_6$, $LiAlCl_4$, $LiSCN$, $LiCF_3SO_3$, $LiCF_3CO_2$, $Li(P(C_2O_4)F_4)$, $LiPF_{6-x}(C_nF_{2n+1})_x$ (wherein 1<x<6, n is 1 or 2), $LiB_{10}Cl_{10}$, $LiCl$, $LiBr$, $LiI$, lithium chloroborane, lithium lower aliphatic carboxylate, borate salts such as $Li_2B_4O_7$ and $Li(B(C_2O_4)F_2)$, and imide salts such as $LiN(SO_2CF_3)_2$, and $LiN(C_lF_{2l+1}SO_2)(C_mF_{2m+1}SO_2)$ (wherein each of l and m is an integer greater than or equal to 1). As the lithium salt, these materials may be used as a single material or a mixture of a plurality of these materials may be used. Of these, $LiPF_6$ is desirably used, from the viewpoints of ion conductivity, electrochemical stability, or the like. A concentration of the lithium salt is desirably set to 0.8 ~ 1.8 mol per 1 L of the solvent.

EXAMPLES

The present disclosure will now be described in further detail with reference to Examples. The present disclosure, however, is not limited to the Examples.

<Example 1>

[Synthesis of Positive electrode Active Material]

$LiMnO_2$, $Li_2MnO_3$, $LiNiO_2$, $SrO$, $CaO$, and $Y_2O_3$ were mixed in such a manner that a stoichiometric ratio was 3:4:3:0.04:0.04:0.02, and the mixture was introduced into a pot made of zirconia having an internal volume of 45 cc and having a ball made of zirconia and having a diameter of 5 mm therein. The pot was set on a planetary ball mill (product name "PLP-7" manufactured by FRITSCH), and the mixture was ground and mixed for 12 hours with a revolution rate of 600 rpm. The mixture was then introduced into a baking furnace, and was baked for 1 hour in the atmospheric air at a temperature of 900°C, to obtain a positive electrode active material.

Using an inductively coupled plasma (ICP) emission spectrometry device (product name "iCAP6300" manufactured by Thermo Fisher Scientific), the composition of the obtained positive electrode active material was analyzed, and the composition was $Li_{1.17}Mn_{0.58}Ni_{0.25}Sr_{0.01}Ca_{0.01}Y_{0.01}O_{2.035}$.

[Production of Positive Electrode]

The positive electrode active material described above, acetylene black, and polyvinylidene fluoride (PVdF) were mixed with a mass ratio of 92:5:3, N-methyl-2-pyrrolidone (NMP) was used as a dispersion medium, and a positive electrode mixture slurry was prepared. The positive electrode mixture slurry was applied over a surface of a positive electrode core made of an aluminum foil, the applied film was dried, the drid film was compressed, and the resulting structure was cut in a predetermined electrode size, to produce a positive electrode in which a positive electrode mixture layer was formed over the positive electrode core.

[Preparation of Non-aqueous Electrolyte Solution]

To a mixture solvent in which fluoroethylene carbonate (FEC) and 3,3,3-trifluoromethyl propionate (FMP) were mixed in a mass ratio of 1:3, $LiPF_6$ was dissolved in a concentration of 1 mol/L, to prepare a non-aqueous electrolyte solution.

[Production of Test Cell]

Lead wires were attached to the positive electrode and to an opposing electrode made of the Li metal, the positive electrode and the opposing electrode were placed opposing each other with a separator made of polyolefin therebetween, to produce an electrode assembly. The electrode assembly and the non-aqueous electrolyte solution were sealed in an outer housing formed from an aluminum laminated film, to produce a test cell.

<Example 2>

A positive electrode active material was synthesized through a method similar to Example 1 except that $LiMnO_2$, $Li_2MnO_3$, $LiNiO_2$, SrO, CaO, and SnO were mixed in such a manner that the stoichiometric ratio was 3:4:3:0.04:0.04:0.04. As a result of an analysis of the composition of the obtained positive electrode active material, it was found that the composition was $Li_{1.17}Mn_{0.58}Ni_{0.25}Sr_{0.01}Ca_{0.01}Sn_{0.01}O_{2.03}$. Using the positive electrode active material, a test cell was produced through a method similar to Example 1.

<Example 3>

A positive electrode active material was synthesized through a method similar to Example 1 except that $LiMnO_2$, $Li_2MnO_3$, $LiNiO_2$, SrO, CaO, $Y_2O_3$, and SnO were mixed in such a manner that the stoichiometric ratio was 3:4:3:0.03:0.03:0.015:0.03. As a result of an analysis of the composition of the obtained positive electrode active material, it was found that the composition was $Li_{1.17}Mn_{0.58}Ni_{0.25}Sr_{0.0075}Ca_{0.0075}Y_{0.0075}Sn_{0.0075}O_{2.03375}$. Using the positive electrode active material, a test cell was produced through a method similar to Example 1.

<Example 4>

A positive electrode active material was synthesized through a method similar to Example 1 except that $LiMnO_2$, $Li_2MnO_3$, $LiNiO_2$, SrO, CaO, $Y_2O_3$, and ZnO were mixed in such a manner that the stoichiometric ratio was 3:4:3:0.03:0.03:0.015:0.03. As a result of an analysis of the composition of the obtained positive electrode active material, it was found that the composition was $Li_{1.17}Mn_{0.58}Ni_{0.25}Sr_{0.0075}Ca_{0.0075}Y_{0.0075}Zn_{0.0075}O_{2.03375}$. Using the positive electrode active material, a test cell was produced through a method similar to Example 1.

<Example 5>

A positive electrode active material was synthesized through a method similar to Example 1 except that $LiMnO_2$, $Li_2MnO_3$, $LiNiO_2$, SrO, CaO, and $Y_2O_3$ were mixed in such a manner that the stoichiometric ratio was 3:4:3:0.02:0.02:0.01. As a result of an analysis of the composition of the obtained positive electrode active material, it was found that the composition was $Li_{1.17}Mn_{0.58}Ni_{0.25}Sr_{0.005}Ca_{0.005}Y_{0.005}O_{2.0175}$. Using the positive electrode active material, a test cell was produced through a method similar to Example 1.

<Example 6>

A positive electrode active material was synthesized through a method similar to Example 1 except that $LiMnO_2$, $Li_2MnO_3$, $LiNiO_2$, SrO, and CaO were mixed in such a manner that the stoichiometric ratio was 3:4:3:0.04:0.04. As a result of an analysis of the composition of the obtained positive electrode active material, it was found that the composition was $Li_{1.17}Mn_{0.58}Ni_{0.25}Sr_{0.01}Ca_{0.01}O_{2.02}$. Using the positive electrode active material, a test cell was produced through a method similar to Example 1.

<Example 7>

A positive electrode active material was synthesized through a method similar to Example 1 except that $LiMnO_2$, $Li_2MnO_3$, $LiNiO_2$, SrO, CaO, and SnO were mixed in such a manner that the stoichiometric ratio was 3:4:3:0.02:0.02:0.02. As a result of an analysis of the composition of the obtained positive electrode active material, it was found that the composition was $Li_{1.17}Mn_{0.58}Ni_{0.25}Sr_{0.005}Ca_{0.005}Sn_{0.005}O_{2.015}$. Using the positive electrode active material, a test cell was produced through a method similar to Example 1.

<Example 8>

A positive electrode active material was synthesized through a method similar to Example 1 except that $LiMnO_2$,

$Li_2MnO_3$, $LiNiO_2$, SrO, and CaO were mixed in such a manner that the stoichiometric ratio was 3:4:3:0.04:0.08. As a result of an analysis of the composition of the obtained positive electrode active material, it was found that the composition was $Li_{1.17}Mn_{0.58}Ni_{0.25}Sr_{0.01}Ca_{0.02}O_{2.03}$. Using the positive electrode active material, a test cell was produced through a method similar to Example 1.

<Example 9>

A positive electrode active material was synthesized through a method similar to Example 1 except that $LiMnO_2$, $Li_2MnO_3$, $LiNiO_2$, CaO, and SnO were mixed in such a manner that the stoichiometric ratio was 3:4:3:0.04:0.08. As a result of an analysis of the composition of the obtained positive electrode active material, it was found that the composition was $Li_{1.17}Mn_{0.58}Ni_{0.25}Ca_{0.01}Sn_{0.02}O_{2.03}$. Using the positive electrode active material, a test cell was produced through a method similar to Example 1.

<Example 10>

A positive electrode active material was synthesized through a method similar to Example 1 except that LiF, $LiMnO_2$, $Li_2MnO_3$, $LiNiO_2$, SrO, CaO, and SnO were mixed in such a manner that the stoichiometric ratio was 0.18:1:1:1:0.036:0.036:0.036. As a result of an analysis of the composition of the obtained positive electrode active material, it was found that the composition was $Li_{1.17}Mn_{0.58}Ni_{0.25}Sr_{0.01}Ca_{0.01}Sn_{0.01}O_{2.025}F_{0.005}$. Using the positive electrode active material, a test cell was produced through a method similar to Example 1.

<Comparative Example>

A positive electrode active material was synthesized through a method similar to Example 1 except that $LiMnO_2$, $Li_2MnO_3$, and $LiNiO_2$ were mixed in such a manner that the stoichiometric ratio was 3:4:3. As a result of an analysis of the composition of the obtained positive electrode active material, it was found that the composition was $Li_{1.17}Mn_{0.58}Ni_{0.25}O_2$. Using the positive electrode active material, a test cell was produced through a method similar to Example 1.

[Assessment of Initial Voltage and Voltage Maintenance Percentage at Charge/Discharge Cycle]

Under a temperature environment of 25°C, each of the test cells of Examples and Comparative Example was charged with a constant current of 0.2 C until 4.7 V, and was then discharged with a constant current of 0.5 C until 2.5 V. An initial voltage was determined using the following formula, based on a discharge curve in this process.

$$\text{Initial voltage} = (\text{discharge energy which is a sum of amounts of electricity at each voltage})/(\text{discharge capacity at 2.5 V})$$

A charge/discharge cycle to charge with a constant current of 0.2 C until 4.7 V and to then discharge until 2.5 V similar to the above was repeated for 50 cycles. A battery voltage at the 50th cycle was determined in a manner similar to the above based on the discharge curve of the 50th cycle, and a voltage maintenance percentage was determined through the following formula.

$$\text{Voltage maintenance percentage} = (\text{battery voltage at 50th cycle})/(\text{initial voltage})$$

TABLE 2 summarizes results of the initial voltage and the voltage maintenance percentage for the test cells of Examples and Comparative Example. TABLE 2 also shows elements included in Me and the molar fractions thereof. A higher value of the voltage maintenance percentage shows suppression of a higher degree of the reduction of the battery voltage due to the charge/discharge cycle.

[TABLE 2]

| | Me* | INITIAL VOLTAGE [V] | VOLTAGE MAINTENANCE PERCENT AGE [%] |
|---|---|---|---|
| EXAMPLE 1 | Sr (1)<br>Ca (1)<br>Y (1) | 3.672 | 96.8 |
| EXAMPLE 2 | Sr (1)<br>Ca (1)<br>Sn (1) | 3.683 | 97.3 |
| EXAMPLE 3 | Sr (0.75)<br>Ca (0.75)<br>Y (0.75)<br>Sn (0.75) | 3.681 | 96.8 |
| EXAMPLE 4 | Sr (0.75)<br>Ca (0.75)<br>Y (0.75)<br>Zn (0.75) | 3.649 | 96.8 |
| EXAMPLE 5 | Sr (0.5)<br>Ca (0.5)<br>Y (0.5) | 3.653 | 96.8 |
| EXAMPLE 6 | Sr (1)<br>Ca (1) | 3.645 | 96.9 |
| EXAMPLE 7 | Sr (0.5)<br>Ca (0.5)<br>Sn (0.5) | 3.626 | 96.9 |
| EXAMPLE 8 | Sr (1)<br>Ca (2) | 3.635 | 96.7 |
| EXAMPLE 9 | Ca (1)<br>Sn (2) | 3.640 | 96.8 |
| EXAMPLE 10** | Sr (1)<br>Ca (1)<br>Sn (1) | 3.691 | 96.2 |
| COMPARATIVE EXAMPLE | --- | 3.656 | 96.1 |

* NUMERICAL VALUE IN PARENTHESIS FOR Me SHOWS MOLAR FRACTION (MOL%)
** EXAMPLE 10 INCLUDES 0.05 MOL% OF F AS ANION

It was confirmed that the test cells of Examples 1 ~ 10 maintain initial voltages equivalent to that of the test cell of Comparative Example which does not include Me, and have higher voltage maintenance percentages than the test cell of Comparative Example. In Examples 1 ~ 3, the initial voltages were also higher in comparison to Comparative Example.

REFERENCE SIGNS LIST

10 secondary battery
11 positive electrode
12 negative electrode
13 separator

14 electrode assembly
15 outer housing
16 sealing assembly
17, 18 insulating plate
19 positive electrode lead
20 negative electrode lead
21 groove portion
22 filter
23 lower vent member
24 insulating member
25 upper vent member
26 cap
26a opening
27 gasket

## Claims

1. A positive electrode active material for a non-aqueous electrolyte secondary battery, the positive electrode active material including a lithium-transition metal composite compound, wherein

   the lithium-transition metal composite compound is represented by a general formula $Li_xMn_yNi_zMe_\alpha O_a F_b$ (wherein $1 \leq x \leq 1.2$, $0.4 \leq y \leq 0.8$, $0 \leq z \leq 0.4$, $x+y+z=2$, $0 < a \leq 0.05$, $1.8 \leq a \leq 2$, $1.8 \leq a+b \leq 2.2$, and Me is at least two elements selected from metal elements other than Li, Mn, and Ni), and
   the Me includes at least one element having an ion radius of 0.6 Å or greater.

2. The positive electrode active material for the non-aqueous electrolyte secondary battery according to claim 1, wherein the Me includes at least one element selected from K, Sr, Ba, Bi, Ca, La, Pr, Y, Dy, Sn, and Zn.

3. The positive electrode active material for the non-aqueous electrolyte secondary battery according to claim 1, wherein the Me includes at least one element selected from Sr, Ca, Y, and Sn.

4. The positive electrode active material for the non-aqueous electrolyte secondary battery according to claim 1, wherein the Me is formed substantially and solely from at least three elements selected from Sr, Ca, Y, and Sn.

5. The positive electrode active material for the non-aqueous electrolyte secondary battery according to claim 1, wherein the Me includes at least an alkaline earth metal element.

6. The positive electrode active material for the non-aqueous electrolyte secondary battery according to claim 1, wherein the $\alpha$ satisfies a condition of $0.01 \leq \alpha \leq 0.03$.

7. A non-aqueous electrolyte secondary battery comprising:

   a positive electrode including the positive electrode active material for the non-aqueous electrolyte secondary battery according to any one of claims 1 to 6;
   a negative electrode; and
   a non-aqueous electrolyte.

Figure 1

## INTERNATIONAL SEARCH REPORT

International application No.

PCT/JP2020/038578

### A. CLASSIFICATION OF SUBJECT MATTER

Int.Cl. H01M4/505(2010.01)i, C01G53/00(2006.01)i, H01M4/525(2010.01)i
FI: H01M4/505, H01M4/525, C01G53/00A

According to International Patent Classification (IPC) or to both national classification and IPC

### B. FIELDS SEARCHED

Minimum documentation searched (classification system followed by classification symbols)
Int.Cl. H01M4/505, C01G53/00, H01M4/525

Documentation searched other than minimum documentation to the extent that such documents are included in the fields searched
Published examined utility model applications of Japan        1922-1996
Published unexamined utility model applications of Japan      1971-2020
Registered utility model specifications of Japan              1996-2020
Published registered utility model applications of Japan      1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2004-87487 A (MATSUSHITA ELECTRIC INDUSTRIAL CO., LTD.) 18 March 2004 (2004-03-18), claims 10, 13, examples 2-2, 2-8 | 1-7 |
| A | JP 2007-516583 A (TRONOX LLC) 21 June 2007 (2007-06-21), claims 1-2 | 1-7 |
| A | JP 2018-508929 A (TIANJIN B&M SCIENCE AND TECH JOINT-STOCK CO., LTD.) 29 March 2018 (2018-03-29), claim 1 | 1-7 |
| A | JP 2002-8660 A (MITSUBISHI MATERIALS CORPORATION) 11 January 2002 (2002-01-11), claims 1, 3 | 1-7 |
| A | WO 2018/198410 A1 (PANASONIC INTELLECTUAL PROPERTY MANAGEMENT CO., LTD.) 01 November 2018 (2018-11-01), claim 7 | 1-7 |

☒ Further documents are listed in the continuation of Box C.    ☒ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 15 December 2020 | 28 December 2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**EP 4 084 142 A1**

**INTERNATIONAL SEARCH REPORT**

| International application No. |
| --- |
| PCT/JP2020/038578 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2018-160323 A (SUMITOMO METAL MINING CO., LTD.) 11 October 2018 (2018-10-11), claim 1 | 1-7 |

Form PCT/ISA/210 (second sheet) (January 2015)

| International application No. |
|---|
| PCT/JP2020/038578 |

```
JP 2004-87487 A      18 March 2004        US 2004/0126660 A1
                                          claims 10, 13, examples 2-2, 2-8
                                          CN 1482699 A

JP 2007-516583 A    21 June 2007          US 2005/0136329 A1
                                          claims 1-2
                                          WO 2005/067077 A2
                                          EP 1698007 A2
                                          CA 2551562 A
                                          KR 10-2006-0127877 A
                                          CN 1898824 A
                                          ZA 200605372 A
                                          AU 2004313086 A
                                          TW 200527742 A

JP 2018-508929 A    29 March 2018         US 2017/0104212 A1
                                          claim 1
                                          WO 2017/066124 A1
                                          CN 107004855 A
                                          KR 10-2018-0009796 A

JP 2002-8660 A      11 January 2002       (Family: none)

WO 2018/198410 A1  01 November 2018       US 2020/0044249 A1
                                          claim 7
                                          EP 3618152 A1
                                          CN 110199418 A

JP 2018-160323 A    11 October 2018       (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6342161 B